# EUROPÄISCHE PATENTANMELDUNG

(11) **EP 4 067 732 A1**
(43) Veröffentlichungstag der Anmeldung: **05.10.2022**
(21) Anmeldenummer: 21166510.4
(22) Anmeldetag: 01.04.2021
(51) Int. Cl.: F21S 41/37, F21S 41/663, F21S 43/14, F21S 43/20, F21S 43/33, B60Q 1/26, F21S 43/239, F21S 43/243, F21S 43/247, F21S 43/30

(54) **FAHRZEUGLEUCHTE MIT EINER EINE REFLEKTOROBERFLÄCHE UMFASSENDEN LEUCHTFLÄCHE**

(71) Anmelder: odelo GmbH, 70329 Stuttgart (DE)
(72) Erfinder: VOLLMER, Marco, 73728 Esslingen am Neckar (DE); HORNUNG, Thorsten, 73760 Ostfildern (DE); KARLOVIC, Kristian, 73529 Schwäbisch Gmünd (DE); WILD, Julian, 70327 Stuttgart (DE); BRÄUNLING, Lisa, 70372 Stuttgart (DE); ENGELSKIRCHEN, Matthias, 72555 Metzingen (DE); RICKING, Thorsten, 71364 Winnenden (DE)
(74) Vertreter: Benninger, Johannes

(57) **Zusammenfassung**

Es wird eine Fahrzeugleuchte (01) mit einem von einem Leuchtengehäuse (02) und einer Lichtscheibe (03) wenigstens zum Teil umschlossenen Leuchteninnenraum (04) beschrieben. Der Leuchteninnenraum beherbergt einen Reflektor (05) wenigstens zum Teil. Der Reflektor (05) umfasst zumindest einen Teil einer Leuchtfläche zur Verwirklichung wenigstens einer Lichtfunktion der Fahrzeugleuchte (01). Der Reflektor (05) umfasst einen zumindest für Licht in einem zumindest für das menschliche Auge sichtbaren Teil des elektromagnetischen Spektrums transparenten Reflektorkörper (50) mit einer Reflektoroberfläche (51). Die Reflektoroberfläche (51) ist zum Teil mit einer reflektierenden Beschichtung versehen. Ein verbleibender Teil (52) der Reflektoroberfläche (51) ist frei von der reflektierenden Beschichtung ausgeführt. Eine erste Lichtquelle (06) strahlt ihr Licht auf die Reflektoroberfläche (51) ein. Eine zweite Lichtquelle (07) strahlt ihr Licht von einer der Reflektoroberfläche (51) abgewandten Seite durch den Reflektorkörper (50) und durch den verbleibenden Teil (52) der Reflektoroberfläche (51) hindurch.

## Beschreibung

Die Erfindung betrifft eine Fahrzeugleuchte gemäß dem Oberbegriff des Anspruchs 1.

Eine Fahrzeugleuchte umfasst beispielsweise einen im Wesentlichen von einem Leuchtengehäuse mit mindestens einer Lichtöffnung und einer diese verschließenden Lichtscheibe umschlossenen Leuchteninnenraum und mindestens ein darin beherbergtes, mindestens eine Lichtquelle umfassendes Leuchtmittel für wenigstens eine Lichtfunktion der Fahrzeugleuchte.

Jede Fahrzeugleuchte, insbesondere Automobilleuchte, erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Für die einzelnen Lichtfunktionen sind zum Teil unterschiedliche Helligkeiten bzw. Sichtweiten sowie zum Teil unterschiedliche Lichtfarben zugeordnet.

Wenigstens einer Lichtquelle des Leuchtmittels einer Fahrzeugleuchte können ein oder mehrere zur Ausformung einer Lichtverteilung beitragende Optikelemente zur Lichtlenkung zugeordnet sein.

Beim Blick von außerhalb des Leuchteninnenraums auf die Lichtscheibe oder durch diese hindurch wird jede Lichtfunktion derart verwirklicht, dass jeder Lichtfunktion mindestens während deren momentaner Erfüllung eine eigene oder ein Teil einer gemeinsamen Leuchtfläche zur Verfügung steht.

Die Lichtscheibe ist durch eine heutzutage meist aus einem Kunststoff hergestellte, transparente Abdeckung gebildet, welche den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Das Leuchtengehäuse bzw. der Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln.

Beispielsweise kann in dem Leuchteninnenraum mindestens ein hinter wenigstens einer Lichtquelle zumindest eines Leuchtmittels angeordneter Reflektor untergebracht sein.

Ein solcher Reflektor, der für einen Betrachter beim Blick von außerhalb des Leuchteninnenraums durch die Lichtscheibe hindurch einsehbar ist, bildet zumindest einen Teil der Leuchtfläche der Fahrzeugleuchte, umfasst diese zumindest teilweise oder ist von der Leuchtfläche zumindest teilweise umfasst.

Der Reflektor kann zumindest zum Teil durch ein separates Bauteil und/oder durch wenigstens einen Teil des Leuchtengehäuses selbst gebildet sein, beispielsweise vermittels einer zumindest teilweisen, reflektierenden Beschichtung.

Die Lichtscheibe selbst kann alternativ oder zusätzlich als ein Optikelement ausgebildet sein, beispielsweise indem sie vorzugsweise an deren Innenseite mit einer zur Erzeugung einer oder mehrerer zuvor erwähnter Lichtverteilungen beitragenden optischen Struktur versehen ist. Hierdurch kann gegebenenfalls auf eine Optikscheibe verzichtet werden.

Beispiele für Fahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Durch DE 10 2019 117 246 A1 ist bekannt, zwei Lichtfunktionen gleicher Lichtfarbe innerhalb der selben Leuchtfläche einmal mittels Durchstrahlen des Lichtleitkörpers mit Licht in der zur Erfüllung der ersten Lichtfunktion vorgesehenen Lichtfarbe einer Lichtquelle und einmal mittels Lichtfarbumwandlung einer Anregungslichtquelle anhand von Fluoreszenz in einem Lichtauskoppelbereich eines Lichtleitkörpers zu verwirklichen. Hierbei ist auch eine Lichtboosterfunktion vorgesehen, beispielsweise um die durch Fluoreszenz erzeugte Schlusslichtfunktion mit dem Licht in der zur Erfüllung der ersten Lichtfunktion vorgesehenen Lichtfarbe zu einer Bremslichtfunktion zu verstärken. Indem nur Teilbereiche des Lichtauskoppelbereichs mit Fluoreszenzwerkstoff versehen sind, können die beiden Lichtfunktionen verschiedene Teilflächen innerhalb der gemeinsamen Leuchtfläche einnehmen.

Eine Aufgabe der Erfindung ist, eine Fahrzeugleuchte mit einer gemeinsamen Leuchtfläche für wenigstens zwei Lichtfunktionen beliebiger Lichtfarbe zu entwickeln.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Ein Gegenstand der Erfindung betrifft demnach eine Fahrzeugleuchte mit einem von einem Leuchtengehäuse und einer Lichtscheibe wenigstens zum Teil umschlossenen Leuchteninnenraum, in dem ein Reflektor wenigstens zum Teil beherbergt ist, der zumindest einen Teil einer Leuchtfläche zur Verwirklichung einer Lichtfunktion der Fahrzeugleuchte bildet und/oder umfasst, oder von einer Leuchtfläche zur Verwirklichung einer Lichtfunktion der Fahrzeugleuchte umfasst ist.

Der Reflektor umfasst einen zumindest für Licht in einem zumindest für das menschliche Auge sichtbaren Teil des elektromagnetischen Spektrums transparenten Reflektorkörper mit einer vorzugsweise sowohl der Lichtscheibe, als auch einer zu reflektierendes Licht abstrahlenden ersten Lichtquelle zumindest zum Teil zugewandten Reflektoroberfläche.

Die Reflektoroberfläche ist zum Teil mit einer reflektierenden Beschichtung versehen.

Ein verbleibender Teil der Reflektoroberfläche ist frei von der reflektierenden Beschichtung ausgeführt.

Die erste Lichtquelle strahlt ihr Licht in den von der Leuchtfläche für zwei Lichtfunktionen umfassten Reflektor ein.

Der Reflektor lenkt das Licht der ersten Lichtquelle in Richtung Lichtscheibe um.

Eine zweite Lichtquelle strahlt ihr Licht von einer der Reflektoroberfläche abgewandten Seite durch den Reflektorkörper und durch die von der reflektierenden Beschichtung freien Bereiche der Reflektoroberfläche hindurch in Richtung Lichtscheibe.

Der frei von der reflektierenden Beschichtung ausgeführte verbleibende Teil der Reflektoroberfläche kann beispielsweise durch freilasern von der reflektierenden Beschichtung befreit sein.

Beispielsweise ist die Reflektoroberfläche zunächst vollflächig mit einer reflektierenden Beschichtung versehen, die im frei von der reflektierenden Beschichtung ausgeführten verbleibenden Teil der Reflektoroberfläche durch Freilasern teilweise entfernt ist.

Die zweite Lichtquelle strahlt ihr Licht durch die von der reflektierenden Beschichtung freigelaserten Bereiche der Reflektoroberfläche hindurch.

Es ist ersichtlich, dass die Erfindung hiernach bevorzugt vorsieht, dass eine erste Lichtquelle ihr Licht in einen die Leuchtfläche für zwei Lichtfunktionen bildenden beziehungsweise von der Leuchtfläche für zwei Lichtfunktionen umfassten Reflektor einstrahlt, wobei eine zweite Lichtquelle ihr Licht durch von der reflektierenden Beschichtung freigelaserte Bereiche hindurchstrahlt.

Dies erlaubt durch freie Gestaltung der freigelaserten Bereiche die Darstellung beispelsweise von Logos/Warnhinweisen, indem nur eine Lichtfunktion aktiviert wird.

Werden beide Lichtfunktionen mit gleicher Lichtfarbe zeitgleich erfüllt, leuchtet die gesamte, den Reflektor umfassende und/oder von diesem umfasste Leuchtfläche in der Lichtfarbe auf.

Wenn keine Lichtfunktion aktiviert wird, kann durch entsprechend feine Strukturierung ein im ausgeschalteten Zustand sichtbares Logo auf dem Reflektor dargestellt werden.

Vorteile gegenüber dem Stand der Technik sind unter Anderem eine Einsparung von Bauraum und Gewicht. Darüber hinaus gehende Vorteile sind die Verwirklichung mindestens zweier Lichtfunktionen beliebiger Lichtfarbe innerhalb ein und derselben Leuchtfläche. Ein zusätzlicher Vorteil ist die Schaffung einer Möglichkeit zur Darstellung von Symbolen und Zeichen, beispielsweise von Warnhinweisen innerhalb einer Leuchtfläche.

Eine vorteilhafte Weiterbildung der Erfindung beschäftigt sich mit dem Freilasern von Teilen einer zuvor verspiegelten Oberfläche eines zumindest in einem für das menschliche Auge sichtbaren Teil des elektromagnetischen Spektrums transparenten Optikelements mit dem Ziel, die verspiegelt verbleibende Teil-Oberfläche des Optikelements als Reflektor für eine durch eine erste, ihr Licht in den Reflektor einstrahlende Lichtquelle verwirklichte Lichtfunktion vorzusehen, und die von der Verspiegelung befreite Teil-Oberfläche des Optikelements als Vorsatz-Optikelement für eine durch eine zweite, ihr Licht durch das Optikelement hindurchstrahlende Lichtquelle verwirklichte Lichtfunktion vorzusehen, wobei zumindest im Bereich der von der Verspiegelung befreiten Teil-Oberfläche auf der der zweiten Lichtquelle zugewandten Seite des Optikelements optisch wirksame Strukturen, wie etwa Linsengeometrien oder dergleichen aufgebracht sind, wodurch die erste und die zweite Lichtfunktion unterschiedliche Lichtverteilungen aufweisen.

Damit ergänzt die vorteilhafte Weiterbildung der Erfindung die voranstehend beschriebenen Ausgestaltungen um den Aspekt, dass die durstrahlende Lichtfunktion Optikelemente passiert, welche eine Anpassung der Lichtverteilung der durchstrahlenden Lichtfunktion bewirkt.

Bei der durchstrahlenden Lichtfunktion handelt es sich dabei um die durch das von der zweiten Lichtquelle abgestrahlte Licht verwirklichte Lichtfunktion.

Eine besonders vorteilhafte Weiterbildung der Erfindung sieht demnach vor, dass zumindest die freigelaserten Bereiche auf einer der zweiten Lichtquelle zugewandten Seite mit die Lichtverteilung des von der zweiten Lichtquelle hindurchgestrahlten Lichts beeinflussenden optisch wirksamen Strukturen versehen sind.

Bei der der zweiten Lichtquelle zugewandten Seite handelt es sich um diejenige, der Reflektoroberfläche abgewandte Seite, von welcher aus die zweite Lichtquelle ihr Licht durch den Reflektorkörper und durch die von der reflektierenden Beschichtung freien Bereiche der Reflektoroberfläche hindurch in Richtung Lichtscheibe strahlt.

Der Leuchtflächenbereich, durch den die zweite Lichtquelle ihr Licht hindurchstrahlt kann demnach optisch strukturiert sein.

Die optische Strukturierung kann vorder- und/oder rückseitig vorgesehen sein.

Eine vorteilhafte Weiterbildung der Erfindung sieht ein Freilasern und Kodieren von Oberflächen vor, beispielsweise das Freilasern von Oberflächen zur Erzeugung von mindestens zwei Lichtfunktionalitäten in einem optisch-strukturierten Leuchtflächenbereich.

Es ist ersichtlich, dass die Erfindung verwirklicht sein kann durch Freilasern von Teilen einer reflektierenden Beschichtung einer Reflektoroberfläche mit dem Ziel, zusätzliche Lichteffekte innerhalb einer für eine oder für zwei Lichtfunktionen gleicher Lichtfarbe zur Verfügung stehenden, die reflektierende Beschichtung umfassenden Leuchtfläche zu verwirklichen.

Die Fahrzeugleuchte kann alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Zusätzliche, über die vollständige Lösung der gestellten Aufgabe und/oder über die voran zu den einzelnen Merkmalen genannten Vorteile hinausgehende Vorteile gegenüber dem Stand der Technik sind nachfolgend aufgeführt.

So schafft die Erfindung erweiterte Möglichkeiten nach dem Bedampfen von optischen Elementen diese zu strukturieren. Ferner schafft sie erweiterte und flexiblere Möglichkeiten für die Darstellung von Schriftzügen, Logos, etc. insbesondere in Fahrzeugleuchten wie etwa automobilen Leuchten und Scheinwerfern. Hierbei handelt es sich beispielsweise um erweiterte und flexiblere Möglichkeiten für die Darstellung von beispielsweise Schriftzügen, Logos, etc., sodass diese bezüglich bei automobilen Leuchten einzuhaltender gesetzlicher Regelungen, wie etwa ECE, FMVSS, SAE, etc., konform sind und eingesetzt werden können.

Insbesondere ermöglicht die Erfindung eine Integration von mehreren Lichtsignaturen in ein und dieselbe sichtbare, beispielsweise durch einen oder mehrere Reflektoren, Optikscheiben, Lichtscheiben, etc. gebildete oder hiervon umfasste oder solche umfassende Leuchtfläche in Leuchten.

Durch das bevorzugt zunächst erfolgende vollflächige bedampfen zur Herstellung der reflektierenden Beschichtung in Verbindung mit einer nachträglichen Laserabtragung der reflektierenden Beschichtung in Teilbereichen der Reflektoroberfläche kann auf schablonierte Bedampfungen verzichtet werde. Solche schablonierten Bedampfungen gehen mit Einschränkungen einher, die sich beispielsweise dadurch ergeben, dass eine Schattenmaske verwendet werden muss, deren Bereiche zusammenhängend sein müssen. Beispielsweise muss für die Aussparung in Form eines Buchstabens "O" die Schattenmaske sich auch im Inneren des "O"s befinden. Daher werden Verbindungsstege von außerhalb nach innerhalb des "O"s erforderlich, die negative Auswirkungen auf die "O"-Kontur haben, da Unterbrechungen in der Kontur erforderlich werden.

Auch kann durch eine Herstellung einer zunächst vollflächigen reflektierenden Beschichtung und einer nachträglichen Laserabtragung von Teilen der reflektierenden Beschichtung auf ein aufwändiges Hinterspritzen von Folien als bisherige Alternative zur schablonierten Bedampfung verzichtet werden.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:

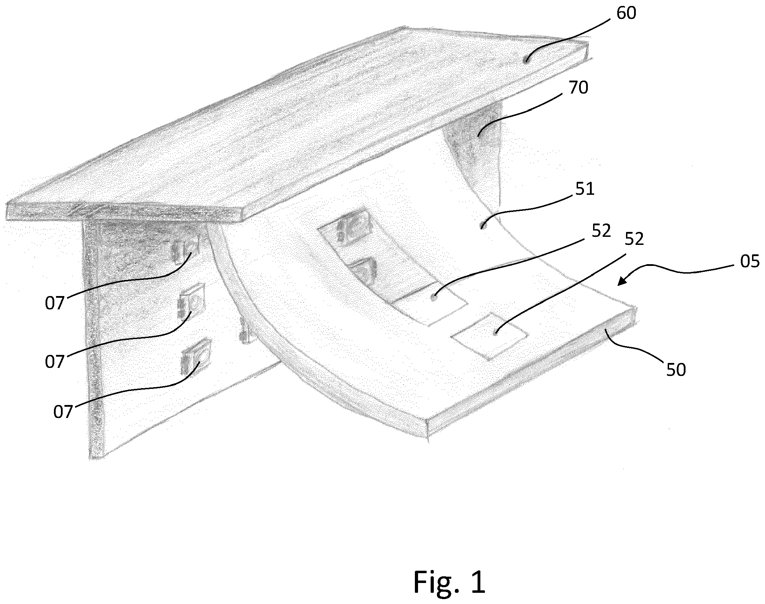

- Fig. 1: ein Ausführungsbeispiel eines Reflektors einer Fahrzeugleuchte, dessen aus transparentem Werkstoff hergestellter Reflektorkörper an seiner zum Teil mit einer reflektierenden Beschichtung versehenen, eine eine oder mehrere Lichtfunktionen der Fahrzeugleuchte verwirklichende Leuchtfläche bildenden Reflektoroberfläche das Licht mindestens einer von einem ersten Leuchtmittel umfassten ersten Lichtquelle umlenkt, und an einem frei von der reflektierenden Beschichtung ausgeführten verbleibenden Teil seiner Reflektoroberfläche das Licht mindestens einer von einem zweiten Leuchtmittel umfassten zweiten Lichtquelle hindurchtreten lässt, in einer perspektivischen Ansicht.

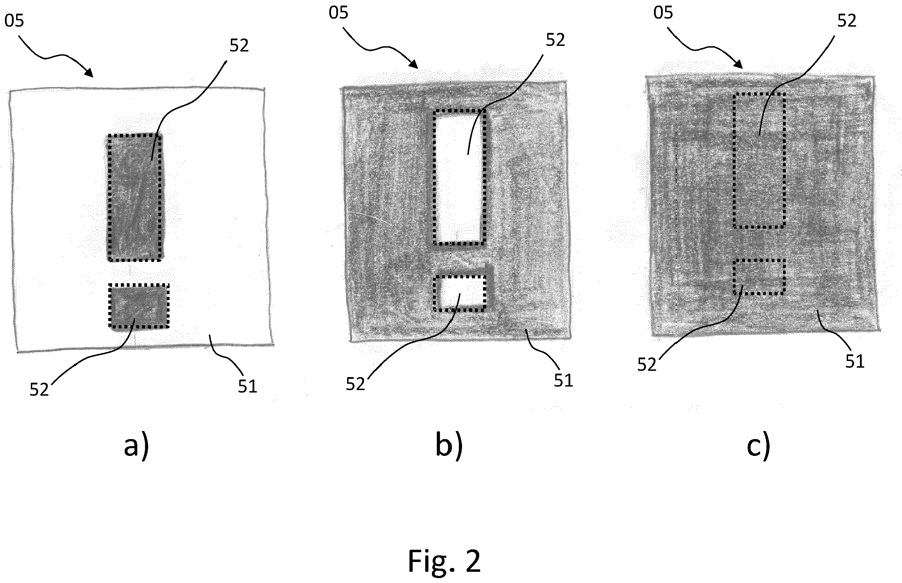

- Fig. 2: drei verschiedene Lichtsignaturen der vermittels der durch die Reflektoroberfläche des Reflektors aus Fig. 1 gebildeten Leuchtfläche verwirklichten Lichtfunktionen bei Betrieb:
- der zweiten Lichtquelle(n) in Fig. 2 a),
- der ersten Lichtquelle(n) in Fig. 2 b), und
- der ersten und der zweiten Lichtquellen in Fig. 2 c) in einer Draufsicht auf die Reflektoroberfläche.

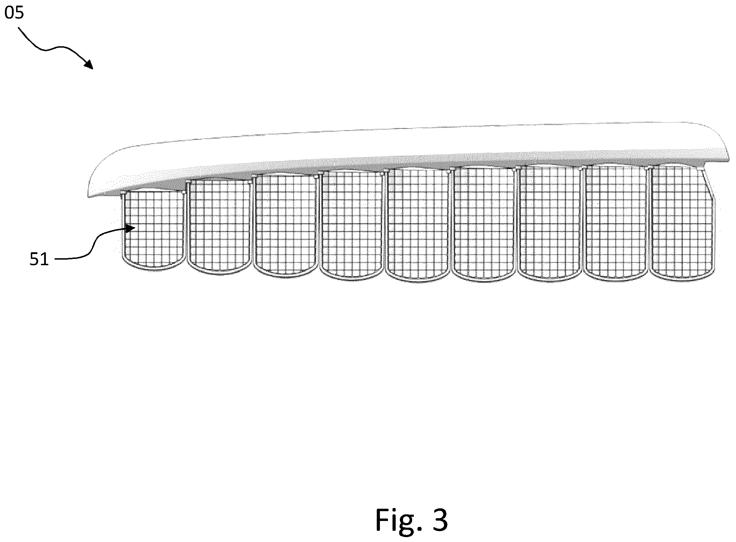

- Fig. 3: ein Ausführungsbeispiel eines durch Bedampfen vollflächig mit einer reflektierenden Beschichtung versehenen Reflektors, dessen Reflektoroberfläche auf mehrere Reflektor-Schaufeln verteilt ist, in einer CAD-Darstellung mit Blick auf die Reflektor-Schaufeln von Fahrzeug hinten aus gesehen in einer Draufsicht.

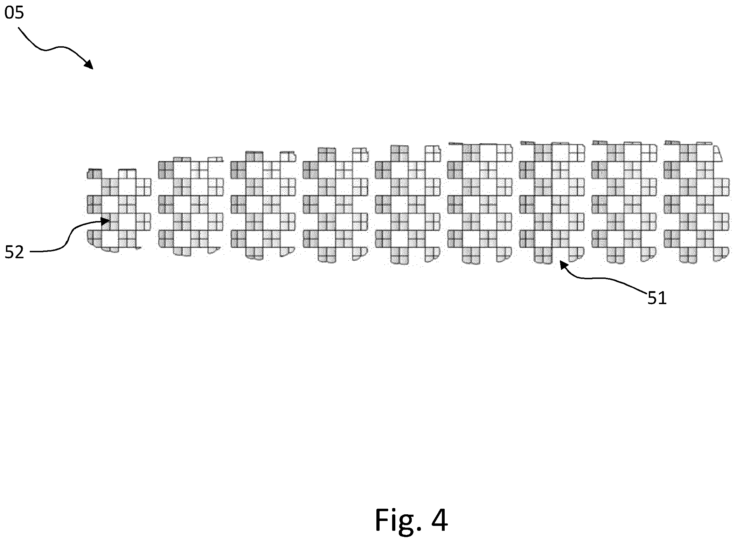

- Fig. 4: ein erstes Ausführungsbeispiel einer Aufteilung einer auf mehrere Reflektor-Schaufeln verteilten Reflektoroberfläche in einen mit einer reflektierenden Beschichtung ausgeführten Teil und in einen frei von einer reflektierenden Beschichtung ausgeführten verbleibenden Teil in Gestalt eines Schachbrettmusters in einer CAD-Darstellung mit Blick auf die Reflektor-Schaufeln von Fahrzeug hinten aus gesehen in einer Draufsicht.

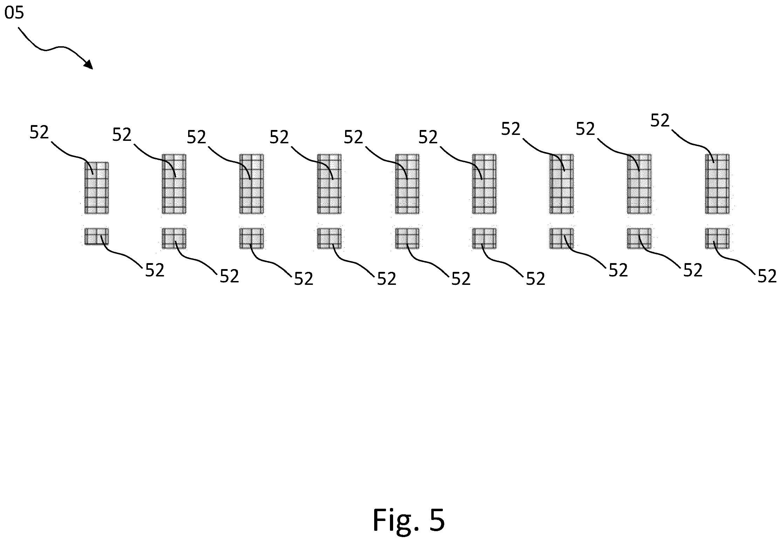

- Fig. 5: ein zweites Ausführungsbeispiel einer Aufteilung einer auf mehrere Reflektor-Schaufeln verteilten Reflektoroberfläche in einen mit einer reflektierenden Beschichtung ausgeführten Teil und in einen frei von einer reflektierenden Beschichtung ausgeführten verbleibenden Teil in Gestalt eines !-Musters in einer CAD-Darstellung mit Blick auf die Reflektor-Schaufeln von Fahrzeug hinten aus gesehen in einer Draufsicht.

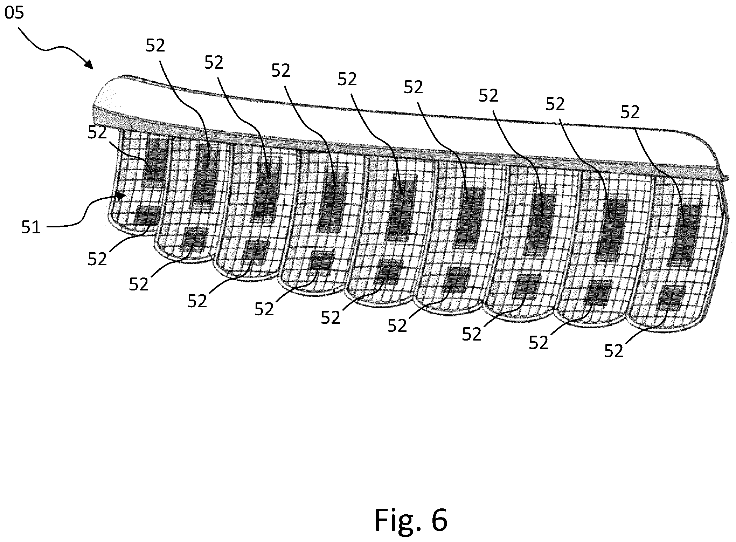

- Fig. 6: eine Detailansicht der Überlagerung des auf mehrere Reflektor-Schaufeln verteilten, mit einer reflektierenden Beschichtung ausgeführten Teils der Reflektoroberfläche und des frei von einer reflektierenden Beschichtung ausgeführten verbleibenden Teils der Reflektoroberfläche in Gestalt eines !-Musters gemäß der Aufteilung aus Fig. 5 in einer perspektivischen Darstellung des Reflektors.

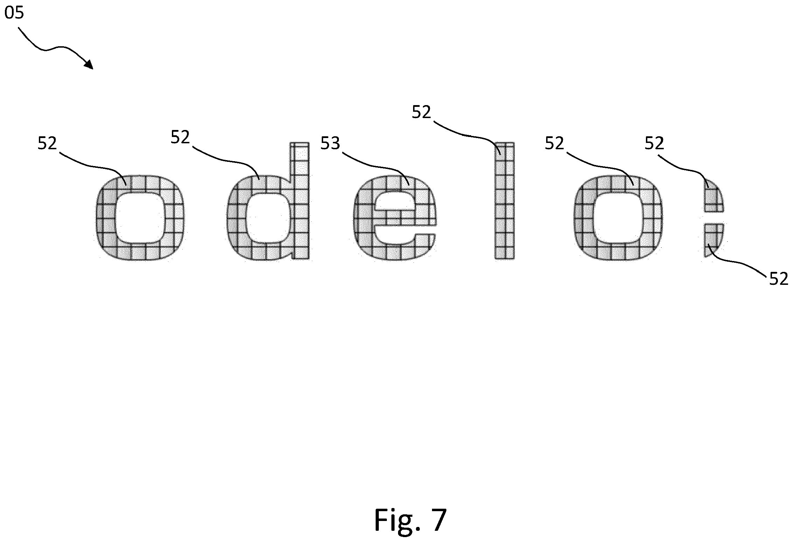

- Fig. 7: ein erstes Ausführungsbeispiel einer Aufteilung einer auf mehrere Reflektor-Schaufeln verteilten Reflektoroberfläche in einen mit einer reflektierenden Beschichtung ausgeführten Teil und in einen frei von einer reflektierenden Beschichtung ausgeführten verbleibenden Teil in Gestalt eines beispielsweise durch freilasern vollflächig von der zuvor auf die gesamte Reflektoroberfläche aufgetragenen reflektierenden Beschichtung befreiten odelo-Schriftzugs in einer CAD-Darstellung mit Blick auf die Reflektor-Schaufeln von Fahrzeug hinten aus gesehen in einer Draufsicht.

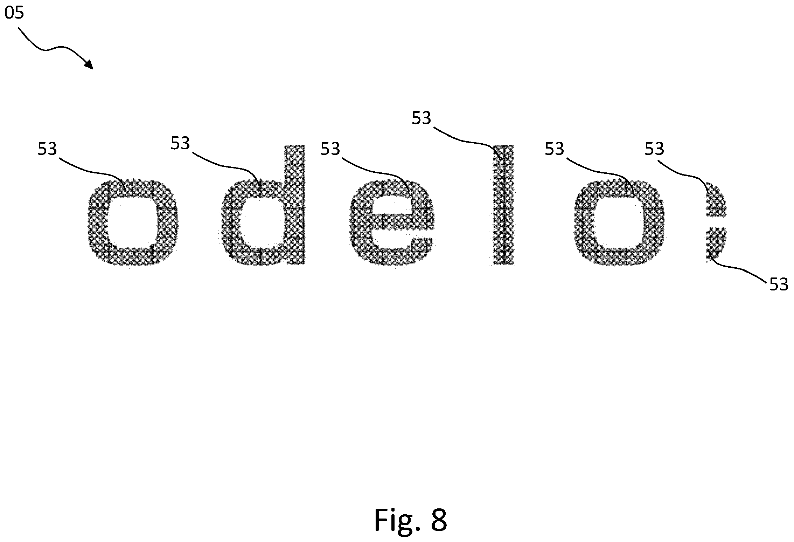

- Fig. 8: ein zweites Ausführungsbeispiel einer Aufteilung einer auf mehrere Reflektor-Schaufeln verteilten Reflektoroberfläche in einen mit einer reflektierenden Beschichtung ausgeführten Teil und in einen frei von einer reflektierenden Beschichtung ausgeführten verbleibenden Teil in Gestalt eines Punktmusters aus großen, beispielsweise durch Freilasern von der zuvor auf die gesamte Reflektoroberfläche aufgetragenen reflektierenden Beschichtung befreiten Punkten zusammengesetzten odelo-Schriftzugs in einer CAD-Darstellung mit Blick auf die Reflektor-Schaufeln von Fahrzeug hinten aus gesehen in einer Draufsicht.

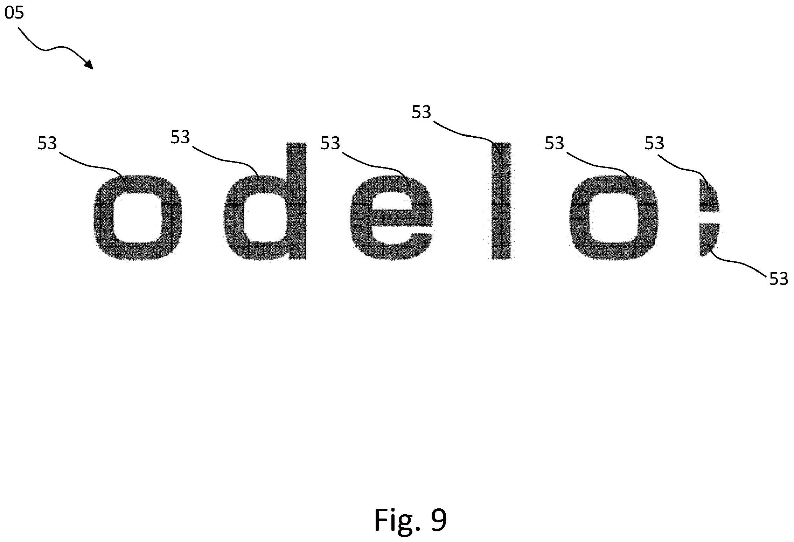

- Fig. 9: ein drittes Ausführungsbeispiel einer Aufteilung einer auf mehrere Reflektor-Schaufeln verteilten Reflektoroberfläche in einen mit einer reflektierenden Beschichtung ausgeführten Teil und in einen frei von einer reflektierenden Beschichtung ausgeführten verbleibenden Teil in Gestalt eines Punktmusters aus mittelgroßen, beispielsweise durch Freilasern von der zuvor auf die gesamte Reflektoroberfläche aufgetragenen reflektierenden Beschichtung befreiten Punkten zusammengesetzten odelo-Schriftzugs in einer CAD-Darstellung mit Blick auf die Reflektor-Schaufeln von Fahrzeug hinten aus gesehen in einer Draufsicht.

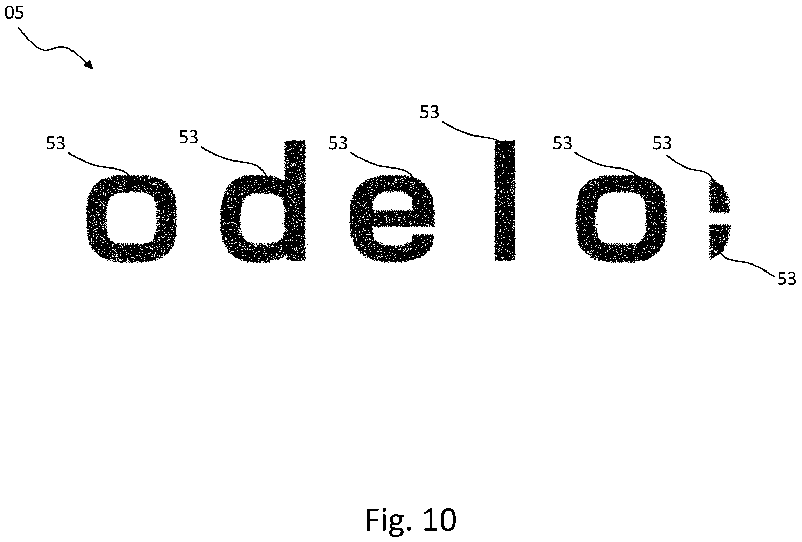

- Fig. 10: ein viertes Ausführungsbeispiel einer Aufteilung einer auf mehrere Reflektor-Schaufeln verteilten Reflektoroberfläche in einen mit einer reflektierenden Beschichtung ausgeführten Teil und in einen frei von einer reflektierenden Beschichtung ausgeführten verbleibenden Teil in Gestalt eines Punktmusters aus kleinen, beispielsweise durch Freilasern von der zuvor auf die gesamte Reflektoroberfläche aufgetragenen reflektierenden Beschichtung befreiten Punkten zusammengesetzten odelo-Schriftzugs in einer CAD-Darstellung mit Blick auf die Reflektor-Schaufeln von Fahrzeug hinten aus gesehen in einer Draufsicht.

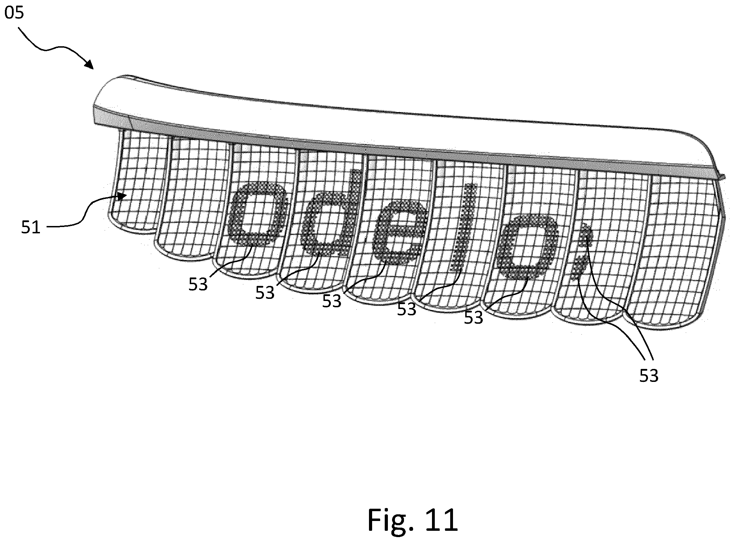

- Fig. 11: eine Detailansicht der Überlagerung des auf mehrere Reflektor-Schaufeln verteilten, mit einer reflektierenden Beschichtung ausgeführten Teils der Reflektoroberfläche und des frei von einer reflektierenden Beschichtung ausgeführten verbleibenden Teils der Reflektoroberfläche in Gestalt eines odelo-Schriftzugs gemäß der Aufteilung aus Fig. 8 in einer perspektivischen Darstellung des Reflektors.
- Fig.: 12eine Fahrzeugleuchte mit dem Reflektor aus Fig. 1 in einem Längsschnitt.

Eine in Fig. 1, Fig. 3, Fig. 6, Fig. 11, Fig. 12 ganz oder in Teilen dargestellte Fahrzeugleuchte 01 umfasst einen von einem Leuchtengehäuse 02 und einer Lichtscheibe 03 wenigstens zum Teil umschlossenen Leuchteninnenraum 04.

In dem Leuchteninnenraum 04 ist ein Reflektor 05 wenigstens zum Teil beherbergt. Der Reflektor 05 bildet und/oder umfasst zumindest einen Teil einer Leuchtfläche zur Verwirklichung wenigstens einer Lichtfunktion der Fahrzeugleuchte 01, oder er ist von einer Leuchtfläche zur Verwirklichung einer Lichtfunktion der der Fahrzeugleuchte 01 umfasst.

Der Reflektor 05 umfasst einen zumindest für Licht in einem zumindest für das menschliche Auge sichtbaren Teil des elektromagnetischen Spektrums transparenten Reflektorkörper 50 mit einer vorzugsweise sowohl der Lichtscheibe 03, als auch einer zu reflektierendes Licht abstrahlenden ersten Lichtquelle 06 zumindest zum Teil zugewandten Reflektoroberfläche 51.

Die Reflektoroberfläche 51 ist zum Teil mit einer reflektierenden Beschichtung versehen. Ein verbleibender Teil 52 der Reflektoroberfläche 51 ist frei von der reflektierenden Beschichtung ausgeführt.

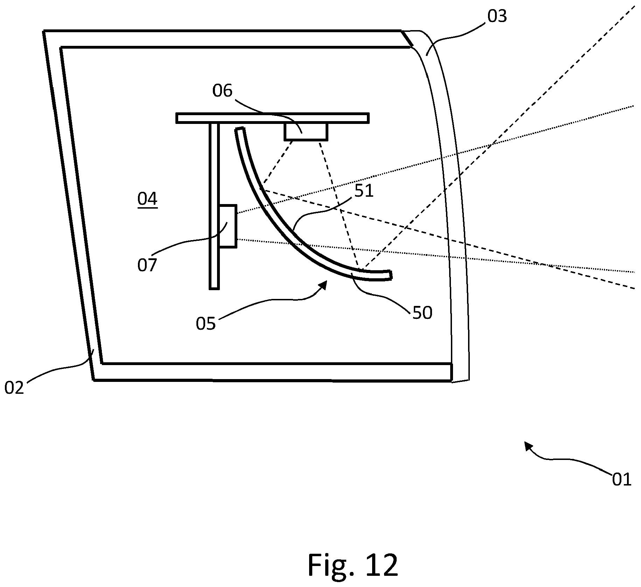

Die bereits erwähnte erste Lichtquelle 06 strahlt ihr Licht in den Reflektor 05 ein, indem sie ihr Licht auf die von der Leuchtfläche für beispielsweise zwei Lichtfunktionen umfassten Reflektoroberfläche 51 strahlt. In Fig. 12 ist der Strahlengang des von der ersten Lichtquelle 06 abgestrahlten Lichts beispielhaft durch gestrichelt eingezeichnete Randstrahlen dargestellt.

Eine zweite Lichtquelle 07 strahlt ihr Licht von einer der Reflektoroberfläche 51 abgewandten Seite durch den Reflektorkörper 50 und durch den beispielsweise in mehrere von der reflektierenden Beschichtung freie Bereiche gegliederten verbleibenden Teil 52 der Reflektoroberfläche 51 beispielsweise in Richtung Lichtscheibe 03 hindurch. In Fig. 12 ist der Strahlengang des von der zweiten Lichtquelle 07 abgestrahlten Lichts ebenfalls beispielhaft durch gepunktet eingezeichnete Randstrahlen dargestellt.

Der Reflektor 05 lenkt das Licht der ersten Lichtquelle 06 bevorzugt in Richtung Lichtscheibe 03 um. Die zweite Lichtquelle 07 strahlt ihr Licht durch den Reflektorkörper 50 und durch den beispielsweise in mehrere von der reflektierenden Beschichtung freie Bereiche gegliederten verbleibenden Teil 52 der Reflektoroberfläche 51 hindurch ebenfalls bevorzugt in Richtung Lichtscheibe 03.

Wie in Fig. 1 dargestellt, kann die erste Lichtquelle 06 Teil eines einen Leiterbahnträger sowie gegebenenfalls ein oder mehrere Elektronikbauteile umfassenden ersten Leuchtmittels 60 sein. Ein solches erstes Leuchtmittel 60 kann mehrere erste Lichtquellen 06 umfassen.

Alternativ oder zusätzlich kann wie ebenso in Fig. 1 gezeigt die zweite Lichtquelle 07 Teil eines einen Leiterbahnträger sowie gegebenenfalls ein oder mehrere Elektronikbauteile umfassenden zweiten Leuchtmittels 70 sein. Auch ein solches zweites Leuchtmittel 70 kann mehrere zweite Lichtquellen 07 umfassen.

Die erste Lichtquelle 06 und/oder die zweite Lichtquelle 07 können vorteilhaft als Halbleiterlichtquellen ausgeführt sein. Halbleiterlichtquellen, wie etwa LEDs (anorganische Leuchtdioden) und/oder OLEDs (organische Leuchtdioden) weisen eine sehr kurze, kaum messbare Aktivierungszeit vom Beginn einer Strombeaufschlagung bis zur Abstrahlung von Licht auf. Dabei erfolgt die Lichtabstrahlung im Gegensatz zu einer Glühlampe quasi vom ersten Augenblick der Strombeaufschlagung an mit voller, der Stromstärke proportionaler Leuchtstärke. Darüber hinaus weisen sie einen hohen Wirkungsgrad bei der Umwandlung von elektrischem Strom in für das menschliche Auge sichtbares Licht auf. Ferner weisen insbesondere LEDs eine sehr hohe Lebensdauer bei Einsatz in Fahrzeugleuchten auf.

Eine vorteilhafte Weiterbildung sieht vor, dass der frei von der reflektierenden Beschichtung ausgeführte verbleibende Teil 52 der Reflektoroberfläche 51 zunächst mit der reflektierenden Beschichtung versehen und anschließend durch freilasern von der reflektierenden Beschichtung wieder befreit ist.

Beispielsweise ist die Reflektoroberfläche 51 zunächst vollflächig mit einer reflektierenden Beschichtung versehen, die im frei von der reflektierenden Beschichtung ausgeführten verbleibenden Teil 52 der Reflektoroberfläche 51 durch Freilasern teilweise wieder entfernt ist.

Die zweite Lichtquelle 07 strahlt ihr Licht hierbei durch die von der reflektierenden Beschichtung freigelaserten Bereiche der Reflektoroberfläche 51 hindurch.

Gemäß den voranstehend beschriebenen Ausgestaltungen ist bevorzugt vorgesehen, dass eine erste Lichtquelle 06 ihr Licht in einen die Leuchtfläche für eine oder mehrere, beispielsweise für zwei Lichtfunktionen bildenden beziehungsweise von der Leuchtfläche für eine oder mehrere, bevorzugt für zwei Lichtfunktionen umfassten Reflektor 05 einstrahlt, wobei eine zweite Lichtquelle 07 ihr Licht durch von der reflektierenden Beschichtung freigelaserte Bereiche hindurchstrahlt.

Dies erlaubt durch freie Gestaltung der freigelaserten Bereiche die Darstellung beispelsweise von Logos/Warnhinweisen innerhalb der durch die Reflektoroberfläche 51 gebildeten Leuchtfläche, indem beispielsweise nur eine Lichtfunktion aktiviert wird.

Werden beide Lichtfunktionen mit gleicher Lichtfarbe zeitgleich erfüllt, leuchtet die gesamte, den Reflektor 05 umfassende und/oder von diesem umfasste Leuchtfläche in der Lichtfarbe auf.

Wenn keine Lichtfunktion aktiviert wird, kann durch entsprechend feine Strukturierung ein im ausgeschalteten Zustand sichtbares Logo auf dem Reflektor 05 dargestellt werden.

Weisen zwei durch die erste Lichtquelle 06 und durch die zweite Lichtquelle 07 verwirklichten Lichtfunktionen unterschiedliche Lichtfarben auf, so können Logos und/oder Warnhinweise innerhalb der durch die Reflektoroberfläche 51 gebildeten Leuchtfläche zusätzlich auch bei gleichzeitiger Aktivierung beider Lichtfunktionen dargestellt werden.

Vorteile gegenüber dem Stand der Technik sind unter Anderem eine Einsparung von Bauraum und Gewicht. Darüber hinaus gehende Vorteile sind die Verwirklichung mindestens zweier Lichtfunktionen beliebiger Lichtfarbe innerhalb ein und derselben Leuchtfläche. Ein zusätzlicher Vorteil ist die Schaffung einer Möglichkeit zur Darstellung von Symbolen und Zeichen, beispielsweise von Warnhinweisen innerhalb einer Leuchtfläche.

Die neuartige Fahrzeugleuchte 01 ermöglicht eine Gestaltung neuer Lichtfunktionalitäten beispielsweise durch einen partiellen Laserabtrag von beispielsweise bedampften Oberflächen sowie alternativ oder zusätzlich eine flexible Anpassung von Lichtsignaturen durch eine dezidierte Beleuchtung von Bauteilen.

Fig. 1 und Fig. 12 zeigen die Möglichkeit, den Reflektor 05 für eine Lichtfunktion zu verwenden, wenn er von oben mit der beispielsweise durch mehrere LEDs verwirklichten ersten Lichtquelle 06 bestrahlt wird, sowie andererseits als eine alterative Lichtfunktion, wenn die beispielsweise ebenfalls durch mehrere LEDs verwirklichte zweite Lichtquelle 07 von hinten eingesetzt wird, - gegebenenfalls auch zusammen mit den von oben einstrahlenden LEDs der ersten Lichtquelle 06.

Damit können beispielsweise auch Klick-Klack-Effekte bei Lichtfunktionen erzeugt werden, beispielsweise indem zwischen Schlusslichtfunktion und Bremslichtfunktion durch hin- und herschalten beispielsweise zwischen den in Fig. 2 dunkel dargestellten, den dem frei von der reflektierenden Beschichtung ausgeführten verbleibenden Teil 52 der Reflektoroberfläche 51 entsprechenden ausgeleuchteten Bereichen der durch die Reflektoroberfläche 51 gebildeten Leuchtfläche in Fig. 2 a) und Fig. 2 b) gewechselt wird.

Werden die einzelnen Bereiche des frei von der reflektierenden Beschichtung ausgeführten verbleibenden Teils 52 der Reflektoroberfläche 51 oder allgemein auf einem optischen Element aus einem transparenten Körper mit einer teilweise mit einer reflektierenden Beschichtung versehenen Oberfläche ausreichend klein gewählt, ist es für den Betrachter aus entsprechender Entfernung nicht mehr erkennbar, dass auf dem Reflektor lückenhafte Sichtsignaturen dargestellt werden. Dies ist insbesondere bei einer Betrachtung im so genannten Fernfeld ab vorzugsweise 10 m Abstand zur Lichtfunktion der Fall. Daher kann auch mit derartigen Ausgestaltungen eine homogene Lichtsignatur verwirklicht werden.

Zudem ist es möglich die beispielsweise durch mehrere LEDs verwirklichten ersten und zweiten Lichtquellen 06, 07 der jeweils anderen Lichtfunktion mit geringer Intensität mitleuchten zu lassen, um die Lücken in der Lichtsignatur unauffälliger zu gestalten. Dies ist insbesondere für eine Betrachtung im Nahfeld aus einem Abstand von weniger als 10 m vorteilhaft. Im oben genannten Beispiel von zwei unterschiedlichen Lichtsignaturen für vorzugsweise die gleiche Lichtfunktion werden dann zur Darstellung beide Bereiche aktiviert, so dass sich die Leuchtdichten der transparenten und der verspiegelten Bereiche einander annähern.

Es besteht ferner die Möglichkeit, zwei Lichtfunktionen über freigelaserte Bereiche auf einem Reflektor 05 zu kombinieren und damit reflektierende und freigelaserte Flächen jeweils so zu gestalten, dass die Abstrahlcharakteristik des Lichts in beiden Fällen weitestgehend gleich ist. Damit lassen sich Warnsymbole, Logos und/oder Designelemente gestalten, die wahlweise mit Positiv- oder Negativkontrast dargestellt werden, aber auch durch eine abgestimmte Beleuchtung beider Bereiche optisch komplett homogen erscheinen können, wie etwa in Fig. 1, Fig. 5, Fig. 6 und Fig. 7 bis Fig. 11 dargestellt.

Wichtig ist hervorzuheben, dass ein derartiges Ergebnis mit einer schablonierten Bedampfung nicht zu erreichen ist, weil ansonsten bei der so genannten Schatten-Maske stets Verbindungsstege angebracht sein müssten, um die abzuschattenden Bereiche auf der Maske mechanisch miteinander zu verbinden. Auch wäre eine derartige Maske mechanisch nicht mehr ausreichend stabil, da sie aus sehr vielen kleinen Elementen bestünde, die nur durch dünne Verbindungsstege zusammengehalten werden. Dies ist für einen Massenprozess in der Herstellung nicht zielführend.

Durch ein Freilasern des beispielsweise in mehrere von der reflektierenden Beschichtung freie Bereiche gegliederten verbleibenden Teils 52 der Reflektoroberfläche 51 ist außerdem ein Verstecken von Logos, Schriftzügen, etc. auf dem beispielsweise als Reflektor ausgeführten optischen Element möglich. Die im Folgenden beschriebene Möglichkeit zeigt eine über Reflexion an einem metallisierten Reflektor umgesetzte Lösung. Analog ist auch eine Umsetzung in einer Optikscheibe möglich, bei der dann freigelaserte Bereiche Licht hindurch lassen und somit leuchten und nicht freigelaserte Bereiche das Licht blockieren und somit nicht leuchten. Bei der Umsetzung in einer Optikscheibe ist auch die Umsetzung mittels einer hinterspritzten bedruckten Folie möglich. Bei der Umsetzung als Reflektor ist dagegen das Hinterspritzen einer bedruckten Folie nachteilig, weil eine gerichtet metallisch reflektierende Fläche nur schwer als Druckmuster erzeugt werden kann. Die weitere Beschreibung erfolgt am Beispiel einer Lichtfunktion mit Reflektor 05.

Auf einem solchen Reflektor 05 sollen Logos und/oder Gestaltungselemente platziert werden, die im ausgeschalteten Zustand der Lichtfunktion sichtbar, im eingeschalteten Zustand jedoch nicht sichtbar sind. Dazu wird beispielsweise das Logo oder Designelement auf dem Reflektor nicht vollflächig freigelasert, sondern nur als feines Punktmuster 53, wie in Fig. 8, Fig. 9, Fig. 10, Fig. 11 dargestellt.

Gemäß dieser vorteilhaften Ausgestaltung ist der verbleibende Teil 52 der Reflektoroberfläche 51 als Punktmuster 53 ausgeführt.

Mit herkömmlichen Verfahren ist ein solches Muster aus kleinen nichtmetallisierten Bereichen nicht zu erzeugen. Im ausgeschalteten Zustand der Lichtfunktion ist das Punktmuster 53 als Logo und/oder Designelement auf dem Reflektor 05 sichtbar. Die kleinen nicht-reflektierenden Bereiche werden jedoch bei eingeschalteter Beleuchtung vollständig überstrahlt, sodass mindestens im Fernfeld visuell nur noch eine homogen leuchtende Fläche wahrnehmbar ist.

Die Ausgestaltung kann beispielsweise so erfolgen, dass anstatt einzelner Prismen einzeln spiegelnde Bereiche verwendet werden. Das Ergebnis kann bei entsprechender Auslegung so gestaltet werden, dass die Lichtsignatur entsprechend ausgeführt ist. Ein Logo oder Designelement mit einer solchen Ausgestaltung kann bis zu einem gewissen Maximalabstand im Nahfeld auch im beleuchteten Zustand noch sichtbar sein.

Dieser Maximalabstand wird im beleuchteten Zustand geringer ausfallen als bei Umgebungslicht im unbeleuchteten Zustand, wenn anstelle der leuchtenden Auskoppelprismen nicht reflektierende, freigelaserte Punkte des Punktmusters 53 treten. Das Erscheinungsbild ist dann gegenüber einer Ausgestaltung mit leuchtenden Auskoppelprismen invertiert. Im beleuchteten Zustand werden die dann nichtleuchtenden Punkte des Punktmusters 53 von der leuchtenden umgebenden Fläche überstrahlt, sodass sie schon bei geringerem Betrachtungsabstand verschwinden.

Insgesamt ist es mit dieser Ausgestaltung möglich, im beleuchteten Zustand eine noch homogenere Leuchtdichte zu erreichen als wenn die Umgebung des Logos und/oder Designelements vollflächig reflektierend gestaltet ist, wie in der zu Beginn des Abschnitts beschriebenen Möglichkeit. Somit wird die Sichtbarkeit von Schriftzügen und/oder Logos und/oder Designelementen im beleuchteten Zustand noch weiter verringert.

Anzumerken ist auch noch die Möglichkeit, einen Mittelweg zwischen der Ausgestaltung mit leuchtenden Auskoppelprismen und der voranstehend beschriebenen Möglichkeit zu wählen. Hierbei ist der freigelaserte Flächenanteil im Bereich des Schriftzugs und/oder Logos und/oder Designelements nicht gleich dem freigelaserten Flächenanteil außerhalb des Schriftzugs und/oder Logos und/oder Designelements, jedoch werden auch dort Bereiche freigelasert, um ein insgesamt homogeneres Erscheinungsbild im beleuchteten Zustand zu erreichen, ohne die Sichtbarkeit des Schriftzugs und/oder Logos und/oder Designelements im ausgeschalteten Zustand zu sehr zu verringern.

Eine vorteilhafte Weiterbildung der Fahrzeugleuchte 01 sieht vor, dass zumindest eine Partie des Reflektorkörpers 50, durch welche Partie die zweite Lichtquelle 07 ihr Licht von der der Reflektoroberfläche 51 abgewandten Seite durch den Reflektorkörper 50 und durch den von der reflektierenden Beschichtung freien verbleibenden Teil 52 der Reflektoroberfläche 51 bevorzugt in Richtung Lichtscheibe 03 hindurch strahlt, mit die Lichtverteilung des von der zweiten Lichtquelle 07 durch die Partie hindurchgestrahlten Lichts beeinflussenden optisch wirksamen Strukturen versehen ist.

Eine besonders vorteilhafte Weiterbildung sieht demnach vor, dass zumindest der frei von der reflektierenden Beschichtung ausgeführte, verbleibende Teil 52 der Reflektoroberfläche 51, beispielsweise die freigelaserten Bereiche einer zuvor vollflächig verspiegelten Reflektoroberfläche 51, auf einer im Strahlengang der zweiten Lichtquelle 07 liegenden und dieser zugewandten Seite mit die Lichtverteilung des von der zweiten Lichtquelle 07 hindurchgestrahlten Lichts beeinflussenden optisch wirksamen Strukturen versehen ist.

Bei der der zweiten Lichtquelle 07 zugewandten Seite handelt es sich um diejenige, der Reflektoroberfläche 51 abgewandte Seite, von welcher aus die zweite Lichtquelle 07 ihr Licht durch den Reflektorkörper 50 und durch die von der reflektierenden Beschichtung 51 freien Bereiche der Reflektoroberfläche 51 hindurch beispielsweise in Richtung Lichtscheibe 03 strahlt.

Der Leuchtflächenbereich, durch den die zweite Lichtquelle 07 ihr Licht hindurchstrahlt, kann demnach zu Zwecken einer Einflussnahme auf die Lichtverteilung von den Leuchtflächenbereich passierendem Licht optisch strukturiert sein.

Eine derart unterschiedliche Beeinflussung der Lichtverteilung des von der ersten Lichtquelle 06 abgestrahlten Lichts und der Lichtverteilung des von der zweiten Lichtquelle 07 abgestrahlten Lichts ist in Fig. 12 durch eine schematische Darstellung einer unterschiedlichen Weitung des Strahlengangs des von der ersten Lichtquelle 06 abgestrahlten Lichts beispielhaft durch gestrichelt eingezeichnete Randstrahlen und des Strahlengang des von der zweiten Lichtquelle 07 abgestrahlten Lichts ebenfalls beispielhaft durch gepunktet eingezeichnete Randstrahlen dargestellt.

Die beispielsweise als optische Strukturierung ausgeführten und/oder eine solche umfassenden optisch wirksamen Strukturen können vorder- und/oder rückseitig des Reflektorkörpers 50 in Bezug auf dessen Durchstrahlung mit Licht der zweiten Lichtquelle 07 angeordnet sein.

Diese vorteilhafte Weiterbildung der Erfindung sieht beispielsweise ein Freilasern von Teilen einer zuvor verspiegelten, eine Reflektoroberfläche bildenden Oberfläche eines einen Reflektorkörper bildenden, zumindest in einem für das menschliche Auge sichtbaren Teil des elektromagnetischen Spektrums transparenten Optikelements vor, verbunden mit dem Ziel, die verspiegelt verbleibende Teil-Oberfläche des Optikelements als Reflektor für eine durch eine erste Lichtquelle verwirklichte Lichtfunktion vorzusehen, die ihr Licht in den Reflektor einstrahlt, und die Partie des Optikelements mit der von der Verspiegelung befreiten Teil-Oberfläche als Vorsatz-Optikelement für eine durch eine zweite Lichtquelle verwirklichte Lichtfunktion vorzusehen, die ihr Licht durch das Optikelement hindurchstrahlt.

Beispielsweise können die beispielsweise als optische Strukturierung ausgeführten und/oder eine solche umfassenden optisch wirksamen Strukturen Linsengeometrien und/oder-felder umfassen.

Vorteilhaft können zumindest im Bereich der von der Verspiegelung verschonten oder beispielsweise befreiten Teil-Oberfläche auf der der zweiten Lichtquelle 07 zugewandten Seite des ein Optikelement bildenden Reflektors 05 optisch wirksame Strukturen, wie etwa Linsengeometrien oder dergleichen aufgebracht sein. Hierdurch weisen die erste und die zweite Lichtfunktion unterschiedliche Lichtverteilungen auf.

Damit ergänzt die vorteilhafte Weiterbildung der Erfindung die voranstehend beschriebenen Ausgestaltungen um den Aspekt, dass die durchstrahlende Lichtfunktion beispielsweise durch makroskopische Optikelemente, wie etwa Linsen oder durch Mikrolinsenarrays gebildete optisch wirksamen Strukturen passiert, welche eine Anpassung der Lichtverteilung der durchstrahlenden Lichtfunktion bewirkt.

Bei der durchstrahlenden Lichtfunktion handelt es sich dabei um die durch das von der zweiten Lichtquelle 07 abgestrahlte Licht verwirklichte Lichtfunktion.

Das in Fig. 1 und in Fig. 12 gezeigte Ausführungsbeispiel zeigt ferner insbesondere die Möglichkeit den Reflektor 05, genauer dessen Reflektoroberfläche 51 als Leuchtfläche für eine kurz als SL (Schlusslicht) bezeichnete Schlusslichtfunktion zu verwenden, wenn er von oben mit Licht der durch LEDs verwirklichten erste Lichtquelle 06 bestrahlt wird, sowie andererseits als Leuchtfläche für eine kurz als BRL (Bremslicht) bezeichnete Bremslichtfunktion, wenn die die zweite Lichtquelle 07 verwirklichenden LEDs von hinten eingesetzt werden. Hierdurch kann zusammen mit den LEDs für das SL auch ein "BRL-Booster" unter Einbeziehung der LEDs der ersten Lichtquelle 06 verwirklicht werden.

Durch entsprechend angepasste Optiken auf dem transparent ausgeführten Reflektorsubstrat können entsprechend für die Darstellung von BRL-Funktionen engere Lichtverteilungen und für SL entsprechend der spiegelnden Bereiche auf dem Reflektorelement weitere Abstrahlbereiche verwirklicht werden. Es ist somit eine Entkopplung der Bereiche und Funktionen möglich.

So ist beispielsweise denkbar, einen Reflektor 05 mit einer partiell freigelaserten Reflektoroberfläche 51 vorzusehen, wobei ein beispielsweise in mehrere Bereiche untergliederter verbleibender Teil 52 der Reflektoroberfläche 51, der frei von der reflektierenden Beschichtung ausgeführt ist, der von hinten von einer oder mehreren zweiten Lichtquellen 07 durchstrahlt wird. Der in mehrere Bereiche untergliederter verbleibender Teil 52 der Reflektoroberfläche 51, der frei von der reflektierenden Beschichtung ausgeführt ist, kann beispielsweise wie ein in Fig. 4 dargestelltes Schachbrettmuster ausgeführt sein. Der verbleibende Teil 52 kann darüber hinaus auf mehrere Teilflächen einer auf mehrere Reflektorschaufeln verteilten Reflektoroberfläche 51 verteilt sein.

Jedes von der reflektierenden Beschichtung freigelaserte Feld des Schachbrettmusters verfügt über eine eigene, im Strahlengang des von der zweiten Lichtquelle 07 durch den Reflektorkörper 50 und den freigelaserten, verbleibenden Teil 52 der Reflektoroberfläche 51 hindurchgestrahlten Lichts angeordnete, transparente Optik. Hierbei kann eine facettierte Optik gebildet werden.

Das Licht wird von den transparenten Optiken auf dem Reflektor 05 entsprechend einer vorgegebenen Wunschvorstellung geformt; Das Reflektorsubstrat, aus dem der Reflektorkörper 50 hergestellt ist, ist transparent. Der Reflektor 05 wurde an seiner Reflektoroberfläche 51 zunächst vollflächig bedampft. Der Reflektor 05 wurde an seiner Reflektoroberfläche 51 anschließend partiell freigelasert, sodass die beispielsweise Aluminium umfassende reflektierende Beschichtung in diesen Bereichen verschwunden ist und das transparente Reflektorsubstrat wieder zum Vorschein tritt. Hierdurch wird nachträglich nach dem vollflächigen Bedampfen der frei von der reflektierenden Beschichtung ausgeführte verbleibende Teil 52 der Reflektoroberfläche 51 gebildet.

Zur Herstellung eines partiell freigelaserten Reflektors 05 kann beispielsweise die Reflektoroberfläche 51 eines transparenten Reflektorkörpers 50 zunächst vollflächig bedampft werden. Nach der Bedampfung kann der Reflektor 05 im genannten Bereich seiner Reflektoroberfläche 51 partiell freigelasert werden.

Eine vorteilhafte Weiterbildung der Erfindung sieht ein Freilasern und Kodieren von Oberflächen vor, beispielsweise das Freilasern von Oberflächen zur Erzeugung von mindestens zwei Lichtfunktionalitäten in einem optisch-strukturierten Leuchtflächenbereich.

Hierbei ist der frei von der reflektierenden Beschichtung ausgeführte verbleibende Teil 52 der Reflektoroberfläche 51 beispielsweise in Gestalt seines Umrisses und/oder Form und/oder Geometrie gemäß einer Kodierung einer Lichtsignatur ausgebildet.

Wichtig ist hervorzuheben, dass die Fahrzeugleuchte 01 wenigstens zwei jeweils mindestens eine Lichtquelle 06, 07 umfassende Leuchtmittel 60, 70 umfassen kann, einem ersten Leuchtmittel 60 mit mindestens der ersten Lichtquelle 06 zur Erfüllung wenigstens einer ersten Lichtfunktion der Fahrzeugleuchte 01 und einem zweiten Leuchtmittel mit mindestens der zweiten Lichtquelle 07 zur Erfüllung wenigstens einer zweiten Lichtfunktion der Fahrzeugleuchte 01.

Vorteilhaft sind bei der Fahrzeugleuchte 01 gleich welcher voranstehend beschriebenen Ausgestaltung die mindestens eine erste Lichtquelle 06 und die mindestens eine zweite Lichtquelle 07 unabhängig voneinander betreibbar.

Bei einem gemeinsamen Betrieb können sie einer Erfüllung der selben Lichtfunktion beitragen.

Alternativ können sie bei einem gemeinsamen Betrieb einer Erfüllung unterschiedlicher Lichtfunktion beitragen.

Es ist ersichtlich, dass die Erfindung verwirklicht sein kann durch Freilasern von Teilen einer reflektierenden Beschichtung einer Reflektoroberfläche 51 mit dem Ziel, zusätzliche Lichteffekte innerhalb einer für eine oder für zwei Lichtfunktionen gleicher oder unterschiedlicher Lichtfarbe zur Verfügung stehenden, die reflektierende Beschichtung umfassenden Leuchtfläche zu verwirklichen.

Ebenfalls wichtig ist hervorzuheben, dass die Erfindung den Stand der Technik dahingehend erweitert, dass eine erste Lichtquelle ihr Licht in einen die Leuchtfläche für zwei Lichtfunktionen bildenden Reflektor einstrahlt, und dass eine zweite Lichtquelle ihr Licht durch von der reflektierenden Beschichtung freigelaserte Bereiche hindurchstrahlt. Dies erlaubt durch freie Gestaltung der freigelaserten Bereiche die Darstellung beispielsweise von Logos und/oder Warnhinweisen. Die Erfindung erweitert den Gestaltungsfreiraum von Leuchten und erzeugt neue Möglichkeiten insbesondere bei der Gestaltung von Lichtsignaturen und der Kodierung von Lichtsignaturen.

Die Erfindung erweitert erheblich die Gestaltungsmöglichkeiten von optischen Systemen.

Die Fahrzeugleuchte 01 kann alternativ oder zusätzlich einzelne oder eine Kombination mehrerer einleitend in Verbindung mit dem Stand der Technik und/oder in einem oder mehreren der zum Stand der Technik erwähnten Dokumente und/oder in der voranstehenden Beschreibung und/oder in den nachfolgenden Ansprüchen erwähnte Merkmale aufweisen.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Fahrzeugleuchte
- 02: Leuchtengehäuse
- 03: Lichtscheibe
- 04: Leuchteninnenraum
- 05: Reflektor
- 06: erste Lichtquelle
- 07: zweite Lichtquelle

- 50: Reflektorkörper
- 51: Reflektoroberfläche
- 52: verbleibender Teil (der Reflektoroberfläche 51)
- 53: Punktmuster

- 60: erstes Leuchtmittel

- 70: zweites Leuchtmittel

## Patentansprüche

1. Fahrzeugleuchte (01) mit einem von einem Leuchtengehäuse (02) und einer Lichtscheibe (03) wenigstens zum Teil umschlossenen Leuchteninnenraum (04), der einen Reflektor (05) wenigstens zum Teil beherbergt, welcher zumindest einen Teil einer Leuchtfläche zur Verwirklichung wenigstens einer Lichtfunktion der Fahrzeugleuchte (01) umfasst, wobei:
- der Reflektor (05) einen zumindest für Licht in einem zumindest für das menschliche Auge sichtbaren Teil des elektromagnetischen Spektrums transparenten Reflektorkörper (50) mit einer Reflektoroberfläche (51) umfasst,
- die Reflektoroberfläche (51) zum Teil mit einer reflektierenden Beschichtung versehen ist,
- ein verbleibender Teil (52) der Reflektoroberfläche (51) frei von der reflektierenden Beschichtung ausgeführt ist,
- eine erste Lichtquelle (06) ihr Licht auf die Reflektoroberfläche (51) einstrahlt, und
- eine zweite Lichtquelle (07) ihr Licht von einer der Reflektoroberfläche (51) abgewandten Seite durch den Reflektorkörper (50) und durch den verbleibenden Teil (52) der Reflektoroberfläche (51) hindurch strahlt.

2. Fahrzeugleuchte nach Anspruch 1, wobei der Reflektor (05) das Licht der ersten Lichtquelle (06) in Richtung Lichtscheibe (03) umlenkt und die zweite Lichtquelle (07) ihr Licht durch den Reflektorkörper (50) und durch den von der reflektierenden Beschichtung freien verbleibenden Teil (52) der Reflektoroberfläche (51) hindurch in Richtung Lichtscheibe (03) strahlt.

3. Fahrzeugleuchte nach Anspruch 1 oder 2, wobei der frei von der reflektierenden Beschichtung ausgeführte verbleibende Teil (52) der Reflektoroberfläche (51) durch freilasern von der reflektierenden Beschichtung befreit ist.

4. Fahrzeugleuchte nach Anspruch 1, 2 oder 3, wobei zumindest eine Partie des Reflektorkörpers (50), durch welche Partie die zweite Lichtquelle (07) ihr Licht von der der Reflektoroberfläche (51) abgewandten Seite durch den Reflektorkörper (50) und durch den von der reflektierenden Beschichtung freien verbleibenden Teil (52) der Reflektoroberfläche (51) hindurch strahlt, mit die Lichtverteilung des von der zweiten Lichtquelle (07) durch die Partie hindurchgestrahlten Lichts beeinflussenden optisch wirksamen Strukturen versehen ist.

5. Fahrzeugleuchte nach Anspruch 4, wobei die optisch wirksamen Strukturen vorder- und/oder rückseitig des Reflektorkörpers (50) angeordnet sind.

6. Fahrzeugleuchte nach Anspruch 4 oder 5, wobei die optisch wirksamen Strukturen Linsengeometrien und/oder-felder umfassen.

7. Fahrzeugleuchte nach einem der voranstehenden Ansprüche, wobei der frei von der reflektierenden Beschichtung ausgeführte verbleibende Teil (52) gemäß einer Kodierung einer Lichtsignatur ausgebildet ist.

8. Fahrzeugleuchte nach einem der voranstehenden Ansprüche, wobei sie wenigstens zwei jeweils mindestens eine Lichtquelle (06, 07) umfassende Leuchtmittel umfasst, einem ersten Leuchtmittel (60) mit mindestens der ersten Lichtquelle (06) zur Erfüllung wenigstens einer ersten Lichtfunktion und einem zweiten Leuchtmittel (70) mit mindestens der zweiten Lichtquelle (07) zur Erfüllung wenigstens einer zweiten Lichtfunktion.

9. Fahrzeugleuchte nach einem der voranstehenden Ansprüche, wobei die erste Lichtquelle (06) und die zweite Lichtquelle (07) unabhängig voneinander betreibbar sind und bei einem gemeinsamen Betrieb einer Erfüllung der selben Lichtfunktion beitragen.

10. Fahrzeugleuchte nach einem der Ansprüche 1 bis 8, wobei die erste Lichtquelle (06) und die zweite Lichtquelle (07) unabhängig voneinander betreibbar sind und bei einem gemeinsamen Betrieb einer Erfüllung unterschiedlicher Lichtfunktion beitragen.

11. Fahrzeugleuchte nach einem der voranstehenden Ansprüche, wobei der verbleibende Teil (52) der Reflektoroberfläche (51) als Punktmuster (53) ausgeführt ist.
